# EUROPÄISCHE PATENTSCHRIFT

(11) **EP 0 743 744 B1**
(45) Veröffentlichungstag und Bekanntmachung des Hinweises auf die Patenterteilung: **24.01.2001**
(21) Anmeldenummer: 96106874.9
(22) Anmeldetag: 02.05.1996
(51) Int. Cl.: H02M 7/00

(54) **Stromrichter**
Current converter
Convertisseur de courant

(30) Priorität: 19.05.1995 DE 19518479
(43) Veröffentlichungstag der Anmeldung: 20.11.1996
(73) Patentinhaber: Thyssen Aufzugswerke GmbH, 73765 Neuhausen a.d.F. (DE)
(72) Erfinder: Herrmann,Günther, 73669 Lichtenwald (DE)
(74) Vertreter: Wössner, Gottfried, Dr. Dipl.-Chem.

(56) Entgegenhaltungen:
- EP-A- 0 599 700
- PATENT ABSTRACTS OF JAPAN vol. 013, no. 113 (E-729), 17.März 1989 & JP 63 283470 A (MITSUBISHI ELECTRIC CORP), 21.November 1988,
- PATENT ABSTRACTS OF JAPAN vol. 011, no. 190 (E-517), 18.Juni 1987 & JP 62 018982 A (HITACHI LTD), 27.Januar 1987,

## Beschreibung

Die vorliegende Erfindung betrifft einen selbstgeführten Stromrichter mit einem mehrphasigen Eingang, einem mehrphasigen Ausgang und einem Gleichspannungszwischenkreis gemäß dem Oberbegriff des Anspruchs 1.

Eine möglichst optimale Energieentnahme von einem speisenden Netz und die möglichst optimale Aufbereitung dieser Energie für einen elektrischen Verbraucher kann mit Hilfe von Stromrichtern bewerkstelligt werden. Hierbei werden zunehmend Stromrichter, insbesondere selbstgeführte Wechselrichter, mit einem Gleichspannungszwischenkreis eingesetzt, die mit schnellschaltenden Leistungshalbleitern bestückt sind.

Eine Wechselspannung vom speisenden Netz wird mit Hilfe eines insbesondere gesteuerten Gleichrichters auf die Gleichspannung des Zwischenkreises transformiert. Ein Wechselrichter wandelt dann die Gleichspannung des Zwischenkreises in eine Wechselspannung für einen elektrischen Verbraucher um. Insbesondere werden über solche Stromrichter elektrische Maschinen mit Energie versorgt, wobei die Drehzahl jeder elektrischen Maschine über die Frequenz und Amplitude der zugeführten Wechselspannung gesteuert wird.

Gerade im Hinblick auf eine möglichst optimale Nachbildung sinusförmiger Stromverläufe an der Netz- und Verbraucherseite des Stromrichters werden sehr schnell schaltende Leistungshalbleiter eingesetzt, die sehr kurze Umschaltzeiten aufweisen. Dies führt dazu, daß infolge dieser kurzen Umschaltzeiten und vorhandener parasitärer Induktivitäten und parasitärer Kapazitäten hohe Überspannungen bzw. hohe kapazitive Ladeströme auftreten. Die Überspannungen hängen proportional von der Stromänderungsgeschwindigkeit und der parasitären Induktivität ab. Die kapazitiven Ladeströme hängen proportional von der Spannungsänderungsgeschwindigkeit und der parasitären Kapazität ab. Dies bedeutet, daß gerade bei sehr leistungsstarken Stromrichtern von etwa 50 kW und mehr hohe Überspannungen und große kapazitive Ladeströme auftreten, die durch geeignete Maßnahmen auf ein vertretbares Maß limitiert werden müssen.

Aus der WO 92/09137 sind ein Verfahren und eine Vorrichtung zum Parallelschalten von Wechselrichtern bekannt. Hierbei werden zwei 3-phasige Wechselrichter parallel an einen gemeinsamen Gleichspannungskreis geschaltet. Jeder Wechselrichter weist eine eigene Steuereinrichtung und drei sogenannte Halbbrücken auf, die jeweils an den Gleichspannungskreis geschaltet sind. Die drei Halbbrücken jedes Wechselrichters liefern drei Phasen, die jeweils mit einer entsprechenden Phase des anderen Wechselrichters zusammengeschaltet sind. Durch eine zusätzliche Steuereinrichtung wird eine aktive Ausgleichsregelung realisiert, die die Stromverteilung zwischen den einzelnen Wechselrichtern beeinflußt.

Mit Hilfe dieser Ausgleichsregelung werden mindestens zwei Wechselrichter verkoppelt, was die Komplexität der Gesamtanordnung wesentlich erhöht.

Dabei ist nachteilig, daß insbesondere bei hohen Leistungen der Gesamtanordnung wirksame Filtermaßnahmen zur Entstörung der Ein- bzw. Ausgangsleitungen erschwert oder gar unmöglich gemacht werden. Der Aufwand dafür steigt überproportional zur Leistungserhöhung an, da die jeweils störbehafteten Leitungen mehrerer einzelner Wechselrichter zusammengeschaltet werden und so Störeinflüsse über die gesamte Anordnung "verteilt" sind.

Aus der Zusammenfassung des japanischen Patents mit der Veröffentlichungsnummer 63283470 (Patent Abstracts of Japan Vol. 013, Nr. 113, 17. März 1989, JP 63283470) ist ein Stromrichter bekannt mit einem dreiphasigen Eingang und einem dreiphasigen Ausgang sowie einem Gleichspannungszwischenkreis. Hierbei sind mehrere gleichartige Grundelemente mit einem Transistor und einem Kondensator vorgesehen, wobei die Grundelemente parallel geschaltet sind und jeweils nur mit einer Phase des Eingangs oder des Ausgangs verbunden sind.

Ein weiterer Stromrichter wird in der Zusammenfassung des japanischen Patents mit der Veröffentlichungsnummer 62018982 (Patent Abstracts of Japan, Vol. 011, Nr. 190, 18. Juni 1987, JP 62018982) offenbart. Dieser weist mehrere gleichartige Paare von Grundelementen auf mit Halbleiterelementen und zu diesen parallel geschalteten Kondensatoren.

Der Erfindung liegt die Aufgabe zugrunde, einen eingangs genannten Stromrichter dahingehend weiterzubilden, daß insbesondere bei sehr leistungsstarken, selbstgeführten Stromrichtern eine preisgünstige Herstellung sowie eine hochwirksame Filterung der störbehafteten Ein- und Ausgangsleitungen ermöglicht werden, wobei induzierte Schaltspannungen und kapazitive Ladeströme minimiert werden.

Erfindungsgemäß ist bei einem gattungsgemäßen Stromrichter vorgesehen, daß jedes Grundelement mindestens ein Filter zur Filterung der Phase des Grundelements aufweist, wobei das Filter aus mindestens einer Drossel, die in Serie in die Phase geschaltet ist, und mindestens einem Kondensator, der zwischen die Phase und eine andere Phase oder einen Abgriff des Zwischenkreises geschaltet ist, besteht.

Durch das zwischenkreisseitige Parallelschalten der Grundelemente, die jeweils einen Kondensator zur Glättung aufweisen, werden auch die Kondensatoren parallel geschaltet, so daß sich bei der insbesondere niederinduktiv ausgeführten Parallelschaltung vorhandene parasitäre Induktivitäten eines jeden Kondensators nicht addieren, sondern eine Gesamtinduktivität bilden, die kleiner als die kleinste Einzelinduktivität ist. Dies führt dazu, daß selbst bei sehr schnell schaltenden Leistungshalbleitern nur verhältnismäßig kleine Überspannungen an diesen auftreten.

Weiterhin wird durch den Aufbau und Anschluß der Grundelemente ein modularer Aufbau des Stromrichters mit einer Vielzahl von gleichartigen Grundelementen ermöglicht, so daß ein preisgünstiger und der gewünschten Leistungsfähigkeit angepaßter Stromrichter realisierbar ist.

Erfindungsgemäß werden auftretende Störspannungen und unerwünschte Ladeströme von parasitären Kapazitäten bereits möglichst nahe an ihrem Entstehungsort herausgefiltert, so daß ihre Einflüsse auf andere Baugruppen und andere Verbraucher weitgehend reduziert werden.

Von Vorteil ist es, wenn der Filter-Kondensator insbesondere mit einem Pol des Zwischenkreises oder mit einem anderen Schaltungspunkt verbunden ist, dessen elektrisches Potential zwischen den Potentialen des Plus- und Minuspols des Zwischenkreises liegt.

Eine Ausführungsform, die insbesondere für höhere Leistungen vorteilhaft ist, zeichnet sich dadurch aus, daß jedes Grundelement als Filter mehrere parallel geschaltete Drosseln und mehrere parallel geschaltete Kondensatoren aufweist. So wird wieder eine Minimierung der wirksamen parasitären Induktivität der Kondensatoren erreicht.

Eine sehr einfache und preisgünstige Herstellung wird dadurch erreicht, daß jedes Grundelement als eine Baueinheit ausgebildet ist. So lassen sich aus standardisierten Grundelementen beliebige für einen Stromrichter erforderliche Leistungsstufen realisieren. Zudem ist eine Herstellung standardisierter Grundelemente aufgrund einer höheren Stückzahl preisgünstiger.

Bevorzugt sind alle Grundelemente in einem gemeinsamen Stromrichtergehäuse nebeneinander angeordnet, in das sie insbesondere einsteckbar sind. Hierdurch werden geringe Längen der zur Verbindung der Grundelemente erforderlichen elektrischen Leitungen ermöglicht, und es ergeben sich geringe Wartungs- und Reparaturkosten, da einzelne Grundelemente unabhängig von den anderen austauschbar sind.

In besonders bevorzugter Ausgestaltung ist vorgesehen, daß bei jedem Grundelement die einzelnen Bauelemente, wie Halbbrücken, Kondensatoren zur Glättung oder Filter, im wesentlichen in einer Haupterstreckungsrichtung aufeinanderfolgend angeordnet sind. Hierdurch ergeben sich kurze Verbindungsleitungen zwischen den einzelnen Bauelementen mit entsprechend geringen Streuinduktivitäten sowie ein einfacher und übersichtlicher Aufbau der Grundelemente.

Dabei ist insbesondere vorgesehen, daß Bauelemente gleicher Funktion benachbart angeordnet sind. Dies ist im Hinblick auf eine einfache Wartung vorteilhaft. Weiter ergeben sich besonders kurze Verbindungsleitungen, da gleiche Bauteile benachbart und deren Anschlüsse in einer oder mehreren gemeinsamen Ebenen angeordnet sind.

Weiterhin zeichnet sich eine bevorzugte Ausführungsform dadurch aus, daß stark strombelastete elektrische Verbindungen zwischen den Bauelementen eines Grundelements im wesentlichen parallel verlaufend zu der Haupterstreckungsrichtung des Grundelements angeordnet sind.

Hierbei sind die elektrischen Verbindungen bevorzugt als Stromschienen oder plattenförmig ausgebildet. Die weitgehende Parallelführung der stark strombelasteten Verbindungsleitungen, dies sind insbesondere die mit dem Minus- und Pluspol des Zwischenkreises verbundenen Leitungen eines Grundelements sowie die Verbindungen zwischen den Filterkondensatoren verschiedener Grundelemente, führt zu einer sehr niederinduktiven Anordnung mit dementsprechend geringen Überspannungen. Dies wird weiter dadurch unterstützt, daß die Verbindungsleitungen eng benachbart zueinander angeordnet sind.

Wenn alle stark strombelasteten Anschlüsse der Bauelemente eines Grundelements im wesentlichen in einer Ebene angeordnet sind, ergeben sich extrem kurze Verbindungen zwischen den Bauelementen, die im wesentlichen in einer Ebene liegen und eine weitgehende Parallelführung der Verbindungsleitungen oder der insbesondere vorgesehenen Verbindungsschienen ermöglichen. Durch diese Anordnung ergeben sich geringe Verbindungslängen zwischen Halbbrücke, Glättungskondensatoren und Filter, so daß Überspannungen bereits nahe am Entstehungsort möglichst kompensiert oder gering gehalten werden.

Eine vorteilhafte Ausführungsform ist dadurch gegeben, daß der Stromrichter zur Kühlung, insbesondere der Leistungshalbleiter, eine Vorrichtung zur Belüftung mit einem im wesentlichen quer zur Haupterstreckungsrichtung der Grundelemente verlaufenden Luftstrom aufweist. Auf diese Weise werden besonders wirksam die in einem Grundelement parallel geschalteten Halbbrücken auf nahezu gleicher Temperatur gehalten, so daß diese ein quasi gleiches Schaltverhalten zeigen und daher nahezu synchron schalten.

Weiterhin ist vorzugsweise vorgesehen, daß die elektrischen Verbindungen innerhalb der Grundelemente und die erforderlichen elektrischen Verbindungen zwischen den Grundelementen jeweils eng benachbart verlaufen und als Sammelschienen oder plattenförmig, insbesondere niederinduktiv ausgebildet sind. So ergeben sich kurze Verbindungslängen innerhalb eines Grundelements. Durch die gleichartige Ausbildung der Grundelemente wird ein einfaches Parallelschalten am Zwischenkreis bei geringen Verbindungslängen ermöglicht. Der eng benachbarte, parallele Verlauf führt zu einer kompakten und niederinduktiven Anordnung.

Insbesondere sind die Grundelemente zur zwischenkreisseitigen Parallelschaltung jeweils direkt an den Kondensatoren zur Glättung mit dem Zwischenkreis verbunden. Hierdurch wird erreicht, daß die Gleichspannung am Zwischenkreis möglichst wenig von Schaltvorgängen beeinflußt wird.

Vorzugsweise weist jedes Grundelement eine Steuereinheit zur Steuerung der Leistungshalbleiter auf. Mit einer eigenen Steuereinheit, die die jeweilige Phase des Grundelements steuert, sind die Grundelemente voneinander weitgehend unabhängig.

Gerade im Hinblick auf größere Leistungen ist bevorzugt vorgesehen, daß jedes Grundelement mehrere parallel geschaltete Halbbrücken für einen gemeinsamen Phasenanschluß aufweist. Hierdurch wird wiederum eine Verringerung der gesamten Streuinduktivität aufgrund einer Parallelschaltung der Streuinduktivitäten der einzelnen Halbbrücken erreicht. Die Aufteilung der Stromlast einer Phase des Stromrichters auf mehrere Halbbrücken hat zudem den Vorteil, daß der jeweils durch eine Halbbrücke fließende Strom und dementsprechend auch die beim Schalten erfolgenden Stromänderungen geringer sind, so daß die auftretenden Überspannungen vermindert sind.

Vorzugsweise sind hierbei alle parallel geschalteten Halbbrükken in einem Grundelement von derselben Steuereinheit angesteuert. So ergibt sich ein geringer Herstellungsaufwand und ein nahezu synchrones Schalten der parallel geschalteten Halbbrükken.

Eine bevorzugte Ausgestaltung zeichnet sich dadurch aus, daß jedes Grundelement zwei in Reihe geschaltete Kondensatoren zur Glättung des Zwischenkreises aufweist. Dies ist gerade bei Verwendung von Elektrolytkondensatoren im Hinblick auf eine ausreichende Spannungsfestigkeit sinnvoll.

Bei sehr leistungsstarken Stromrichtern ist vorgesehen, daß jedes Grundelement mehrere parallel geschaltete Kondensatoren oder mehrere parallel geschaltete Paare von in Reihe geschalteten Kondensatoren zur Glättung des Zwischenkreises aufweist. Hierdurch ergibt sich wiederum der Vorteil einer weitgehenden Minimierung der Gesamtsumme aller bei den einzelnen Kondensatoren auftretenden parasitären Induktivitäten.

Bei einer bevorzugten Ausführungsform ist vorgesehen, daß jeweils allen eingangsseitigen und/oder allen ausgangsseitigen Grundelementen Gruppen von Kondensatoren zugeordnet sind. Dabei dienen die Kondensatoren einer Glättung des Zwischenkreises, und es ergibt sich ein einfacher Aufbau von insbesondere sehr leistungsfähigen Stromrichtern.

Nachfolgend wird die Erfindung anhand der Zeichnung mehrerer Ausführungsbeispiele näher erläutert. Es zeigen:
- Fig. 1: einen prinzipiellen Aufbau eines Stromrichters;
- Fig. 2a: ein Schaltbild eines ersten Grundelements;
- Fig. 2b: das Grundelement nach Fig. 2a;
- Fig. 3a: ein Schaltbild eines zweiten Grundelements;
- Fig. 3b: das Grundelement nach Fig. 3a;
- Fig. 4a: ein Schaltbild einer Vollbrücke;
- Fig. 4b: die Vollbrücke nach Fig. 4a;
- Fig. 5a: ein Schaltbild eines 3-phasigen Wechselrichters;
- Fig. 5b: den 3-phasigen Wechselrichter nach Fig. 5a;
- Fig. 6: ein Schaltbild eines Stromrichters mit 3-phasigem Eingang und 6-phasigem Ausgang;
- Fig. 7a(1) und (2): ein Schaltbild eines 3-phasigen Stromrichters; und
- Fig. 7b: den prinzipiellen Aufbau des Stromrichters nach Fig. 7a.

Generell werden für gleiche oder vergleichbare Teile gleiche Bezugszeichen verwendet, auch wenn teilweise eine explizite, wiederholte Benennung gleicher Teile weggelassen ist.

Unter dem Begriff "Phase" ist hier eine elektrische Leitung zu verstehen, die mit einer Wechselspannung beaufschlagt ist und sich von anderen Phasen insbesondere durch den Phasenwinkel der Wechselspannung bezogen auf eine Grundschwingung unterscheidet.

Mit dem Begriff "Wechselrichter" wird eine Vorrichtung zur Umwandlung einer Gleichspannung eines Zwischenkreises in eine Wechselspannung bezeichnet. Unter dem Begriff "Stromrichter" ist eine Vorrichtung zur Umwandlung einer Wechselspannung über eine Gleichspannung in eine Wechselspannung zu verstehen.

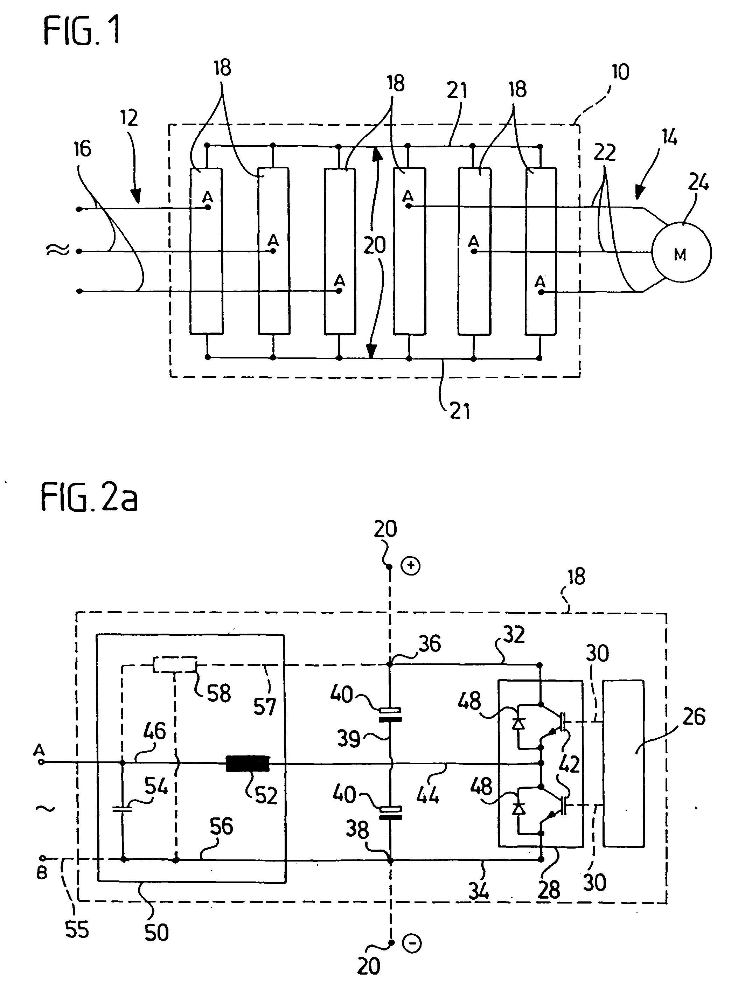

Fig. 1 zeigt einen prinzipiellen Aufbau eines Stromrichters 10, der einen 3-phasigen Eingang 12 und einen 3-phasigen Ausgang 14 aufweist. Der Eingang 12 ist über drei Eingangsleitungen 16, die jeweils einer Phase entsprechen, mit einem Netz, insbesondere dem 400-Volt-Drehstromnetz, verbunden.

Im Stromrichter 10 sind die Eingangsleitungen 16 jeweils über einen Anschluß A an ein Grundelement 18 angeschlossen. Die zu den drei Eingangsleitungen 16 korrespondierenden Grundelemente 18 sind an nicht bezeichneten, gleichspannungsseitigen Anschlüssen parallel geschaltet und an Leitungen 21 eines Gleichspannungszwischenkreises 20 angeschlossen. Sie bilden einen eingangsseitigen, gesteuerten Gleichrichter. An die Zwischenkreisleitungen 21 sind weitere drei Grundelemente 18 als ausgangsseitiger Wechselrichter geschaltet, wobei von jedem Anschluß A eine Ausgangsleitung 22 zum Ausgang 14 des Stromrichters 10 führt. Am Ausgang 14 ist im dargestellten Beispiel als Verbraucher 24 eine elektrische Maschine angeschlossen. Hierbei bilden die drei Ausgangsleitungen 22 drei Phasen für die elektrische Maschine.

Der Stromrichter 10 wandelt die am Eingang 12 anliegende Netzspannung mittels der an die Eingangsleitungen 16 angeschlossenen Grundelemente 18 in eine am Zwischenkreis 20 anliegende Gleichspannung um, welche beispielsweise 600 Volt betragen kann. Der Zwischenkreis 20 speist wiederum im dargestellten Ausführungsbeispiel drei Grundelemente 18, die die Gleichspannung des Zwischenkreises 20 auf eine Wechselspannung mit einstellbarer Frequenz und Amplitude zur Versorgung der am Ausgang 14 angeschlossenen elektrischen Maschine umformen.

Je nach Phasenzahl des angeschlossenen Verbrauchers 24 können auch mehr oder weniger Grundelemente 18 an den Zwischenkreis 20 zur Bildung eines Ausgangs 14 mit einer entsprechenden Anzahl von Phasen vorgesehen sein.

Im Ausführungsbeispiel nach Fig. 1 ist es möglich, daß der Verbraucher 24 generatorische Energie liefert, die über die mit dem Ausgang 14 verbundenen Grundelemente 18 auf die Gleichspannung des Zwischenkreises 20 umgeformt und anschließend von den mit dem Eingang 12 verbundenen Grundelementen 18 zurück ins Netz gespeist wird.

Jedoch ist es auch möglich, die Umformung der eingangsseitigen Wechselspannung in die Gleichspannung des Zwischenkreises 20 durch einen üblichen Netzgleichrichter auszuführen, der keine Energierückspeisung in das Netz ermöglicht.

Fig. 2a zeigt eine erste Ausführungsform des Grundelements 18. Das Grundelement 18 weist eine Steuereinheit 26 auf, die eine Halbbrücke 28 über angedeutete Steuerleitungen 30 steuert. Die Halbbrücke 28 ist über elektrische Verbindungen 32 und 34 jeweils mit einem Pluspol 36 und einem Minuspol 38 des Zwischenkreises 20 verbunden.

Hierzu parallel geschaltet weist das Grundelement 18 zwei mittels einer elektrischen Verbindung 39 in Reihe geschaltete Kondensatoren 40 auf. Die Kondensatoren 40 dienen einer Glättung der Gleichspannung des Zwischenkreises 20. Sie sind im Ausführungsbeispiel als Elektrolytkondensatoren ausgebildet.

Die Halbbrücke 28 schaltet wahlweise in Abhängigkeit von Steuersignalen der Steuereinheit 26 und des momentanen Arbeitspunktes einen der Pole 36, 38 des Zwischenkreises 20 auf den Anschluß A des Grundelelements 18, also die Phase mit einem der Pole 36, 38 kurz. Hierzu weist die Halbbrücke 28 zwei schnellschaltende, steuerbare Leistungshalbleiter 42 auf, die jeweils über eine der Verbindungen 32, 34 an einen der Pole 36, 38 angeschlossen und über elektrische Verbindungen 44, 46 und eine Drossel 52 mit dem gemeinsamen Anschluß A verbunden sind, wobei der Anschluß A die jeweilige Phase der Halbbrücke 28 führt. Die steuerbaren Leistungshalbleiter 42 sind im Ausführungsbeispiel Leistungstransistoren.

Weiter sind antiparallel zu den Leistungstransistoren in der Halbbrücke 28 Dioden 48 geschaltet, die nicht steuerbare Leistungshalbleiter der Halbbrücke 28 darstellen. Diese übernehmen die Stromführung des Ausgangsstromes, wenn der für die entsprechende Stromrichtung geeignete Leistungstransistor nicht leitend geschaltet wird.

Bei der Ausführungsform nach Fig. 2a ist in die jeweilige Phase des Grundelements 18 ein Filter 50 geschaltet. Das Filter 50 weist eine Drossel 52 auf, die zwischen die Verbindungen 44 und 46 geschaltet ist, so daß die Drossel 52 in Serie in die Phase geschaltet ist. Weiter umfaßt das Filter 50 einen nach der Drossel 52 zwischen die Phase und den Zwischenkreis 20 geschalteten Kondensator 54. Hierzu ist der Kondensator 54 einerseits über eine elektrische Verbindung 56 an den Minuspol 38 und andererseits an die elektrische Verbindung 46, also an die mit dem Anschluß A verbundene Seite der Drossel 52, angeschlossen.

Der Kondensator kann mit einer Seite aber auch an den Pluspol 36 des Zwischenkreises 20, an eine andere Phase (Anschluß A eines anderen Grundelements 18) oder an einen anderen Schaltungspunkt angeschlossen sein, dessen elektrisches Potential höher ist als jenes des Minuspols 38 und niedriger als jenes des Pluspols 36 des Zwischenkreises 20.

Das Filter 50 dient dem Ausfiltern von auf der Phase aufgrund kurzer Umschaltzeiten der Leistungshalbleiter der Halbbrücke 28 auftretenden Störspannungen bzw. kapazitiven Ladeströmen.

In einer alternativen Ausführungsform, die in Fig. 2a gestrichelt dargestellt ist, kann das Filter 50 zusätzlich einen elektrischen Dreipol 58 umfassen, der zum einen mit dem Pluspol 36 der Gleichspannung des Zwischenkreises 20, des weiteren mit dem Minuspol 38 und zum anderen mit der Phase am Anschluß A, also mit dem Ausgang des Filters 50, elektrisch verbunden ist. Der Dreipol 58 beinhaltet ein Netzwerk, das aus Kondensatoren, Dioden und Widerständen gebildet sein kann. Diese erweiterte Ausführungsform des Filters 50 kann statt der zuerst genannten Ausführungsform des Filters 50 verwendet oder zusätzlich mit der letztgenannten in Reihe geschaltet werden. Je nach Dimensionierung der einzelnen Filter 50 oder Filterkombinationen ist somit ein gewünschtes Maß der Störunterdrückung erzielbar.

In Abhängigkeit von der Beschaltung des Grundelements 18 kann dieses einen zusätzlichen Anschluß B auf seiner Wechselspannungsseite aufweisen. Dieser kann mit der Gleichspannung des Zwischenkreises 20, und zwar im Ausführungsbeispiel mit dem Minuspol 38 über die Verbindungen 55, 56, verbunden sein, oder unter Weglassen der Verbindung 56 zum Minuspol 38 nur mit einer Seite des Kondensators 54.

In dem Grundelement 18 und der Halbbrücke 28 können auch weitere, nicht dargestellte, Bauelemente integriert sein, die zum Beispiel einer Strommessung und Rückmeldung an die Steuereinheit 26 zur Regelung der Schaltzeitpunkte der Leistungstransistoren dienen.

Beim zwischenkreisseitigen Parallelschalten mehrerer Grundelemente 18 im Stromrichter 10, wie in Fig. 1 dargestellt, werden die Halbbrücken 28 verschiedener Grundelemente 18 und die paarweise in Reihe geschalteten Kondensatoren 40 verschiedener Grundelemente 18 zueinander parallel geschaltet. Hierdurch ergibt sich eine Minimierung der bei den jeweiligen Bauelementen auftretenden parasitären Induktivitäten. Dies ist dadurch zu erklären, daß eine Parallelschaltung der parasitären Induktivitäten erfolgt, wobei der Kehrwert der entstehenden Gesamtinduktivität gleich der Summe der Kehrwerte der einzelnen Induktivitäten ist. Somit ist die gesamte parasitäre Induktivität geringer als die kleinste der einzelnen parasitären Induktivitäten. Im gleichen Maß verringern sich auftretende Überspannungen, da diese zu der parasitären Induktivität proportional sind.

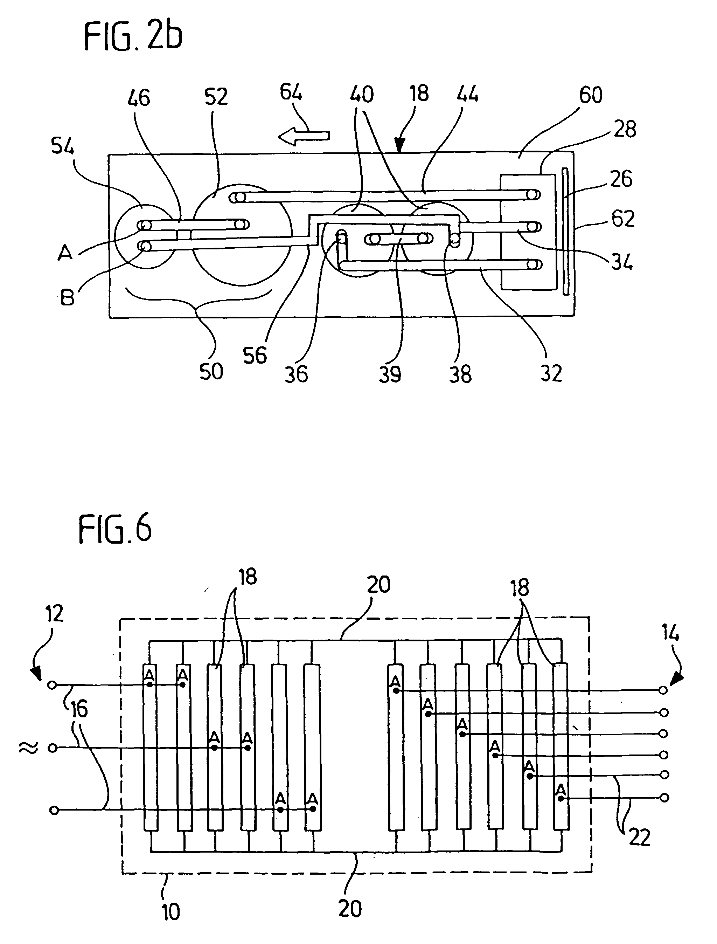

Fig. 2b zeigt den tatsächlichen Aufbau des Grundelements 18 nach der ersten Ausführungsform gemäß Fig. 2a. Das Grundelement 18 bildet eine Baueinheit 60 auf einem Bauträger 62. Ausgehend von einem Ende des Bauträgers 62 sind in einer Haupterstrekkungsrichtung 64 die Steuereinheit 26, die Halbbrücke 28, die Kondensatoren 40, die Drossel 52 und der Kondensator 54 hintereinander angeordnet.

Diese Reihenfolge bildet einen bevorzugten räumlichen Aufbau, da sich eine weitgehende räumliche Trennung des Zwischenkreises 20 von der Wechselstromseite ergibt, was eine gegenseitige Beeinflussung minimiert. Zudem ist der für eine externe wechselstromseitige Verbindung des Stromrichters 10 erforderliche Anschluß A und gegebenenfalls B praktischerweise an einem Ende des Grundelements 18 angeordnet, so daß die Anschlüsse A, B auch bei mehreren nebeneinander angeordneten Grundelementen 18 leicht zugänglich sind.

Jedoch ist auch eine andere Reihenfolge möglich, so daß beispielsweise die an den Kondensatoren 40 vorgesehene Verbindung des Grundelements 18 mit dem Zwischenkreis 20 im der Wechselstromseite gegenüberliegenden anderen Endbereich des Grundelements 18 zu liegen kommt.

Soweit die einzelnen, hintereinander angeordneten Bauelemente eine ungefähr längliche Form oder eine Richtung mit einer größten Erstreckung aufweisen, sind sie generell, auch bei den nachfolgenden Ausführungsbeispielen, mit ihren Längsachsen und Haupterstreckungsrichtungen parallel zueinander und nebeneinander angeordnet. Dies führt zu einem sehr kompakten Grundelement 18.

Alle Leistungsanschlüsse der genannten Bauelemente sind im wesentlichen in einer Ebene, hier der Zeichenebene, angeordnet. Die wichtigsten, stark strombelasteten Verbindungen 32, 34, 39, 44, 46 und 56 sind in Fig. 2b dargestellt. Diese elektrischen Verbindungen, die beispielsweise durch entsprechend dimensionierte flexible Leitungen oder starre Stromschienen realisiert sind, verlaufen im wesentlichen parallel zueinander und parallel zu der Haupterstreckungsrichtung 64 und sind des weiteren im wesentlichen in einer Ebene angeordnet. Hierdurch ergibt sich eine Anordnung mit sehr geringen Verbindungslängen und einer sehr geringen Streuinduktivität, so daß nur kleine Überspannungen am wechselstromseitigen Anschluß A und an den Leistungstransistoren sowie an den Dioden 48 auch bei sehr kurzen Umschaltzeiten und großen geschalteten Strömen auftreten. Die Verbindungsleitungen innerhalb eines Grundelements 18, welche einen Anschluß am Minuspol 38 oder Pluspol 36 aufweisen, sind vorzugsweise eng benachbart verlaufend und als Stromschienen oder plattenförmig und somit niederinduktiv ausgeführt.

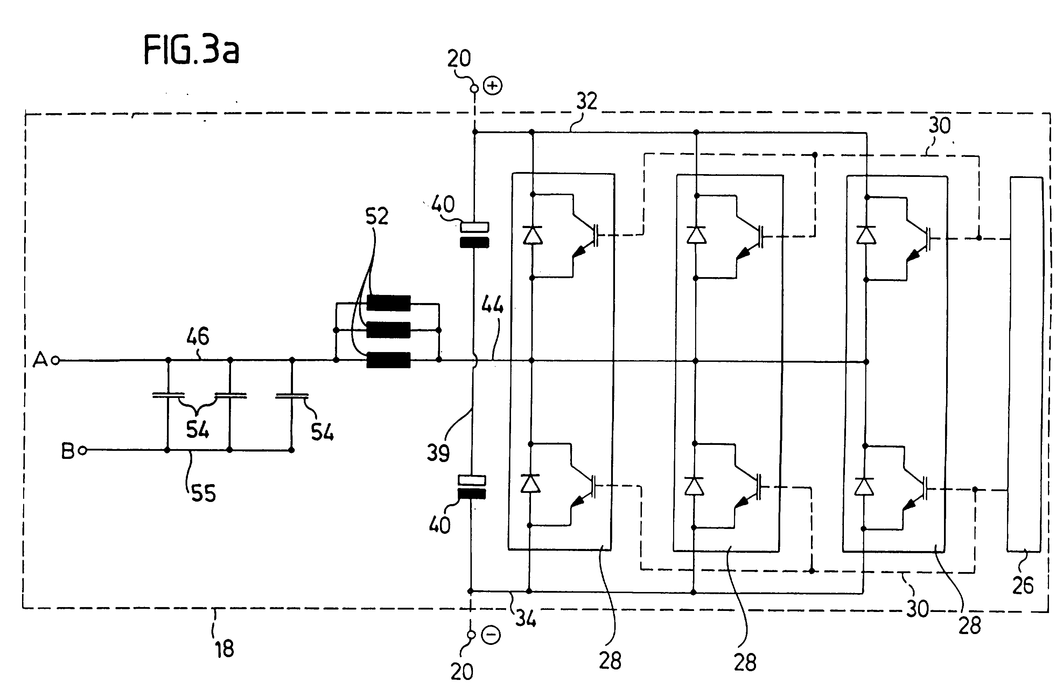

Eine zweite Ausführungsform des Grundelements 18 ist im Schaltbild nach Fig. 3a dargestellt. Hierbei sind in dem Grundelement 18 drei Halbbrücken 28 parallel geschaltet, die von derselben Steuereinheit 26 angesteuert sind. Bei der Parallelschaltung sind die Halbbrücken 28 mit ihrem phasenseitigen Ausgang jeweils an die Verbindung 44 angeschlossen.

Weiterhin sind im Grundelement 18 zwei Kondensatoren 40 zur Glättung der Gleichspannung des Zwischenkreises 20 vorgesehen. Die Baugröße des Filters 50 wurde verdreifacht, dies bedeutet, daß drei Drosseln 52 sowie drei Kondensatoren 54 vorgesehen sind. Sowohl die Drosseln 52 als auch die Kondensatoren 54 sind parallel geschaltet. Es ergeben sich somit, bezogen auf die Nennspannung und den Nennstrom, unabhängig von der Leistungsstufe jeweils gleiche Spannungsabfälle an den Drosseln 52 und gleiche relative (auf den Nennstrom bezogene) Kondensatorströme.

Durch die insbesondere niederinduktiv ausgeführte Parallelschaltung der Kondensatoren 54 wird die bauteilbedingte parasitäre Induktivität eines jeden Kondensators 54 mit den parasitären Induktivitäten der weiteren Kondensatoren 54 parallel geschaltet, so daß sich eine entsprechend verringerte Gesamtinduktivität ergibt. Im vorliegenden Fall liegt diese bei der Parallelschaltung von drei Kondensatoren 54 bei einem Drittel des Wertes für einen einzigen Kondensator 54. Aufgrund der drei parallel geschalteten Halbbrücken 28 ergibt sich auch die dreifache Leistungsfähigkeit des Grundelements 18, so daß dementsprechend ein dreifacher Strom gegenüber der ersten Ausführungsform über den Anschluß A fließen kann.

Wegen der dreifachen Stromtragfähigkeit des Grundelements 18 sind auch drei parallel geschaltete Drosseln 52 vorgesehen, welche eine resultierende dreifache parasitäre Kapazität gegenüber einer Einzeldrossel aufweisen.

Da einerseits der kapazitive Ladestrom dreimal so hoch ist und andererseits die parasitäre Gesamtinduktivität der Kondensatoren 54 auf ein Drittel gesunken ist, ergibt sich keine höhere Störspannung an den Kondensatoren 54, so daß trotz Leistungssteigerung gegenüber der ersten Ausführungsform eine vergleichbare Filterwirkung vorhanden ist.

Entsprechendes gilt für die den Halbbrücken 28 imanente parasitäre Induktivität, die durch die Parallelschaltung der drei Halbbrücken 28 auf ein Drittel gegenüber der ersten Ausführungsform reduziert ist. Aufgrund des dreifachen Stroms ergibt sich auch hier im Vergleich zur ersten Ausführungsform keine höhere Überspannung.

Dies stellt einen wichtigen Vorteil der Erfindung dar, da trotz einer Leistungserhöhung des Grundelements 18 bei der zweiten Ausführungsform gegenüber der ersten Ausführungsform keine höheren Stör- oder Überspannungen auftreten. Selbstverständlich kann auch eine Parallelschaltung mehrerer Paare von in Reihe geschalteten Kondensatoren 40 vorgesehen sein, wenn dies erforderlich ist.

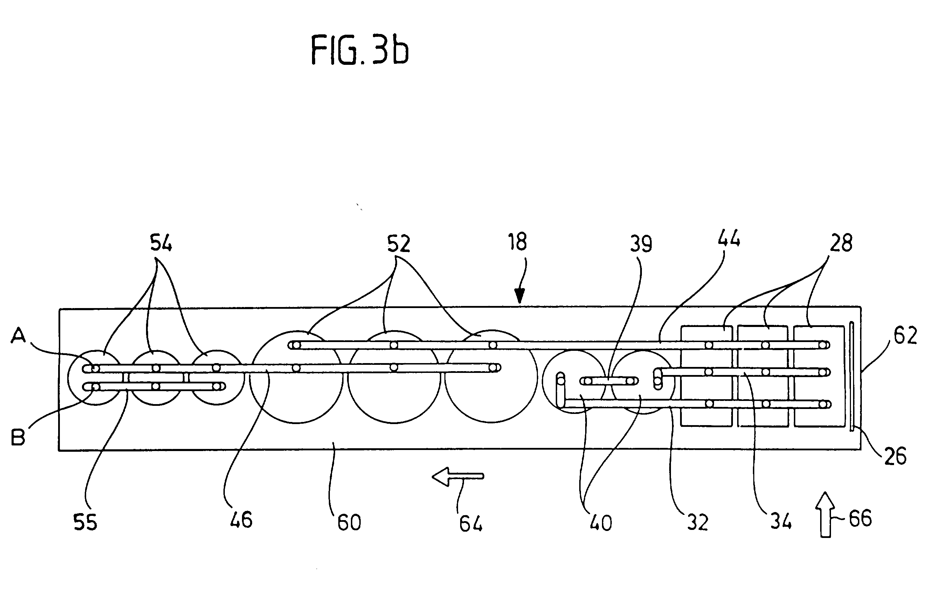

Fig. 3b zeigt den Aufbau des Grundelements 18 gemäß der zweiten Ausführungsform. Hierbei sind wieder alle Bauelemente des Grundelementes 18 auf einem Bauträger 62 zu einer Baueinheit 60 zusammengefaßt. Beginnend von einem vorderen Ende sind die Steuereinheit 26, die parallel geschalteten Halbbrücken 28, die Kondensatoren 40, die Drosseln 52 sowie die Kondensatoren 54 in einer Haupterstreckungsrichtung 64 der Baueinheit 60 aufeinanderfolgend angeordnet. Es ergeben sich wiederum die gleichen Vorteile wie bei der ersten Ausführungsform gemäß Fig. 2b.

Des weiteren sind hier jeweils die gleichen Bauelemente, wie die Halbbrücken 28, die Kondensatoren 54 usw., direkt benachbart angeordnet. So sind nur extrem kurze Verbindungslängen zwischen den Anschlüssen der gleichen Bauelemente erforderlich, da die Anschlüsse in einer oder mehreren gemeinsamen Ebenen nahe beieinander liegen.

Hier sind die Bauelemente, wie auch beim ersten Ausführungsbeispiel nach Fig. 2, alle in der Haupterstreckungsrichtung 64 hintereinander angeordnet. Jedoch können diese auch teilweise nebeneinander angeordnet sein, soweit dies die Breite des Grundelements 18 zuläßt.

Zusätzlich ist in Fig. 3b durch den Pfeil 66 die Richtung eines von einer nicht dargestellten Vorrichtung erzeugten Luftstroms zur Belüftung des Grundelements 18 angedeutet. Ein solcher Luftstrom verläuft quer zur Haupterstreckungsrichtung 64 der Baueinheit 60, so daß die nebeneinander in Haupterstreckungsrichtung 64 angeordneten Halbbrücken 28 im wesentlichen auf die gleiche Temperatur gekühlt werden. Dies ist wichtig, damit die Bauelemente ein gleiches elektrisches Verhalten aufweisen, da das Schaltverhalten und die Durchlaßspannung der Leistungstransistoren sowie der Dioden 48 und damit das Verhalten der Halbbrücken 28 temperaturabhängig sind.

Dementsprechend ist es gerade bei einer Parallelschaltung mehrerer Halbbrücken 28 mit einer gemeinsamen Phase, wobei die Halbbrücken 28 gemeinsam von einer Steuereinheit 26 angesteuert werden, zur Sicherstellung eines möglichst synchronen Schaltverhaltens wichtig, eine effektive und gleiche Kühlung für alle parallel geschalteten Halbbrücken 28 zu erreichen, wie dies hier verwirklicht ist.

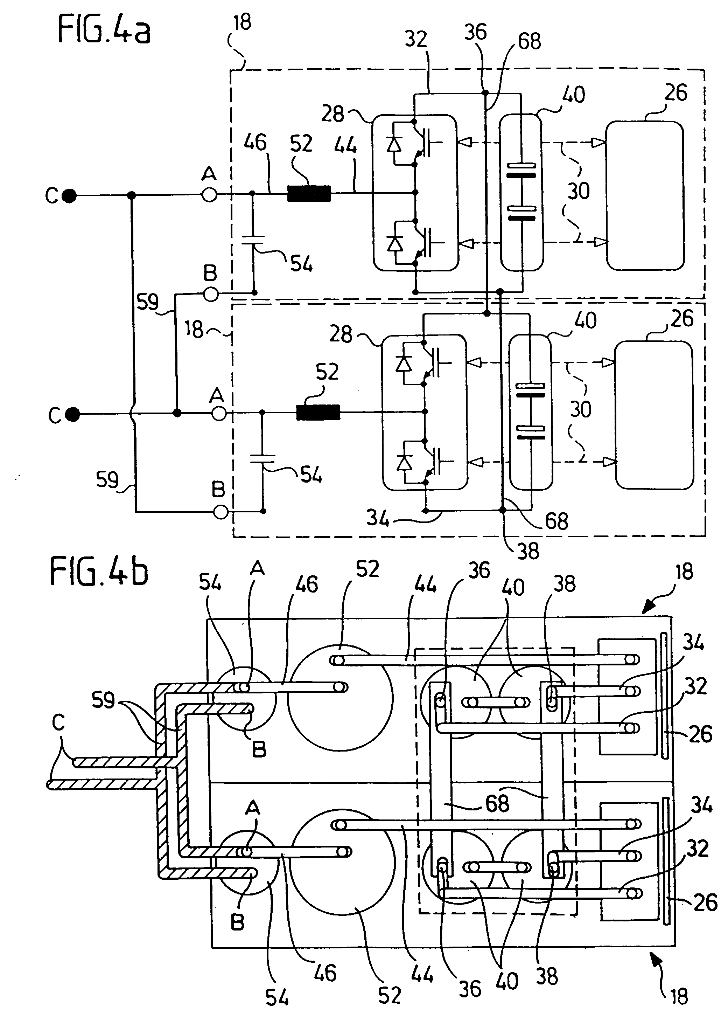

Fig. 4a zeigt das Schaltbild einer Vollbrücke. Dies ist eine Kombination zweier Grundelemente 18, bei der die Anschlüsse A und B über Kreuz miteinander verbunden sind, so daß zwei Anschlüsse C als Ausgang entstehen, zwischen denen eine Wechselspannung anliegt. Zur kreuzweisen Verbindung sind Anschluß A des ersten Grundelements 18 mit dem Anschluß B des zweiten Grundelements 18 sowie die verbleibenden Anschlüsse B und A jeweils über eine Leitung 59 miteinander verbunden. Jede Leitung bildet einen Anschluß C. Beim Ausführungsbeispiel gemäß Fig. 4a entsprechen die Grundelemente 18 dem ersten Ausführungsbeispiel gemäß Fig. 2a und b, wobei aber jeweils die Verbindung 56 vom Kondensator 54 zum Minuspol 38 entfallen ist.

Fig. 4b zeigt den Aufbau und die Zusammenschaltung der beiden Grundelemente 18 zur Realisierung der Schaltung gemäß Fig. 4a. Hierbei sind die Kondensatoren 40 mit ihren Polen 36 und 38 über Sammelschienen 68 parallel geschaltet und an den Zwischenkreis 20 angeschlossen bzw. bilden einen Teil von diesem.

Die Vollbrücke gemäß Fig. 4b bildet einen einphasigen Wechselrichter und kann beispielsweise bei dem Stromrichter 10 gemäß Fig. 1 auf der Netzseite in den Zwischenkreis 20 geschaltet sein, wobei die zwei Eingangsleitungen 16 mit den Anschlüssen C verbunden sind. Am Eingang 12 des Stromrichters 10 ist dann ein einphasiges Wechselspannungsnetz, wie zum Beispiel das übliche 230-Volt-Netz, angeschlossen.

Weiterhin kann die Vollbrücke auch auf der Ausgangsseite des Stromrichters 10 zur Versorgung eines einphasigen Verbrauchers 24 mit einer in Frequenz und Amplitude steuerbaren Wechselspannung angeordnet sein. Dieser Verbraucher kann beispielsweise eine Gleichstrommaschine sein.

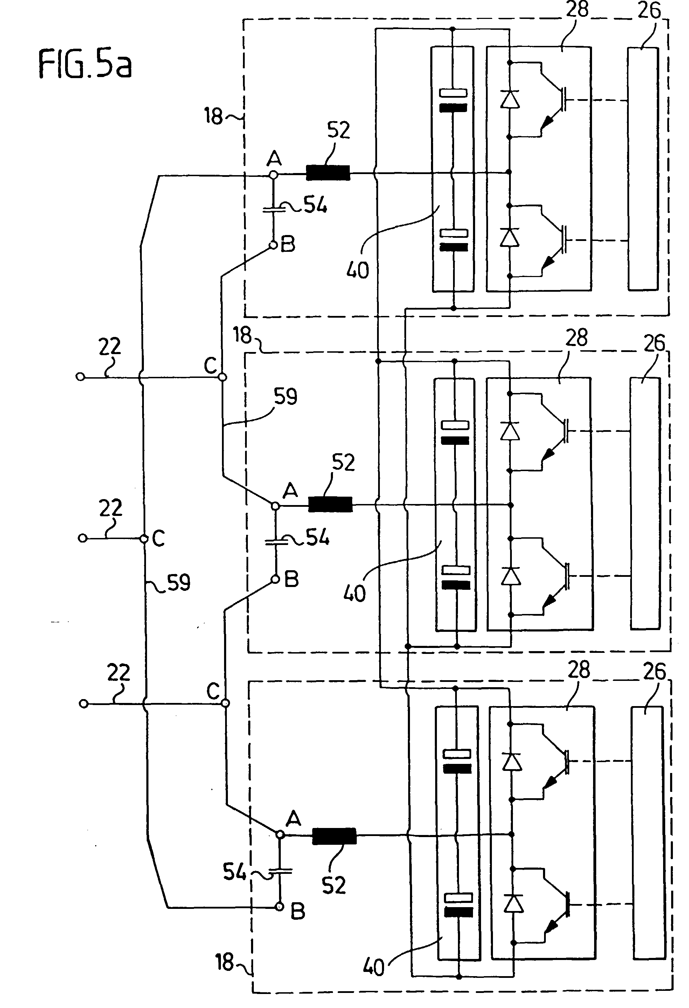

Fig. 5a zeigt das Schaltbild einer zwischenkreisseitigen Parallelschaltung von drei Grundelementen 18, wobei die Grundelemente 18 der ersten Ausführungsform gemäß Fig. 2a und 2b unter Auftrennung der Verbindung 56 entsprechen. Die drei Grundelemente 18 bilden einen 3-phasigen Wechselrichter, der bei Verwendung zur Speisung des Ausgangs 14 des Stromrichters 10, wie in Fig. 1 dargestellt, die Gleichspannung des Zwischenkreises 20 in ein 3-phasiges Drehspannungssystem für einen Verbraucher 24 mit drei Phasen umwandelt.

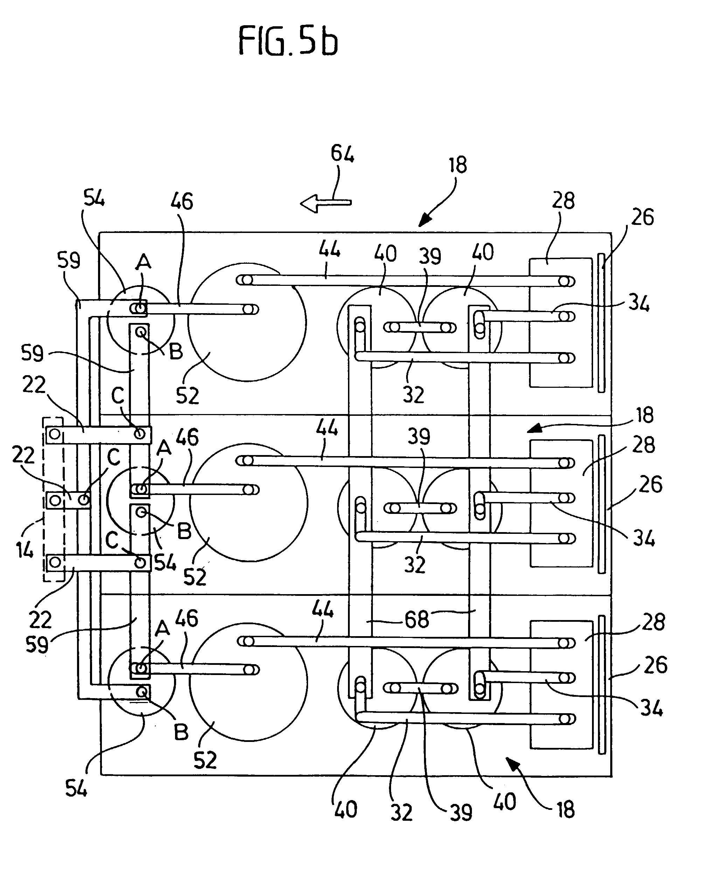

Die Realisierung des Wechselrichters gemäß Fig. 5a ist in Fig. 5b dargestellt. Hierbei ist zu erkennen, daß sich die Sammelschienen 68 quer zur Haupterstreckungsrichtung 64 der drei nebeneinander angeordneten Grundelemente 18 erstrecken. Auch hier bilden die Sammelschienen 68 einen Teil des Zwischenkreises 20, der des weiteren mit eingangsseitig am Stromrichter 10 vorgesehenen Grundelementen 18 oder einem nicht dargestellten Stromversorgungsteil verbunden ist.

Die drei Grundelemente 18 sind jeweils mit ihrem Anschluß A über eine elektrische Verbindung 59 und einen Anschluß C mit einer Ausgangsleitung 22 verbunden, die jeweils am Ausgang 14 des Stromrichters 10 eine Phase für einen Verbraucher bereitstellt. Die beispielsweise für eine Stern- oder Dreiecksschaltung der Kondensatoren 54 (Anschlüsse B) verschiedener Grundelemente 18 erforderlichen Verbindungen 59 sind im wesentlichen quer zur Haupterstreckungsrichtung 64, vorzugsweise eng benachbart verlaufend, insbesondere plattenförmig und somit niederinduktiv, ausgeführt.

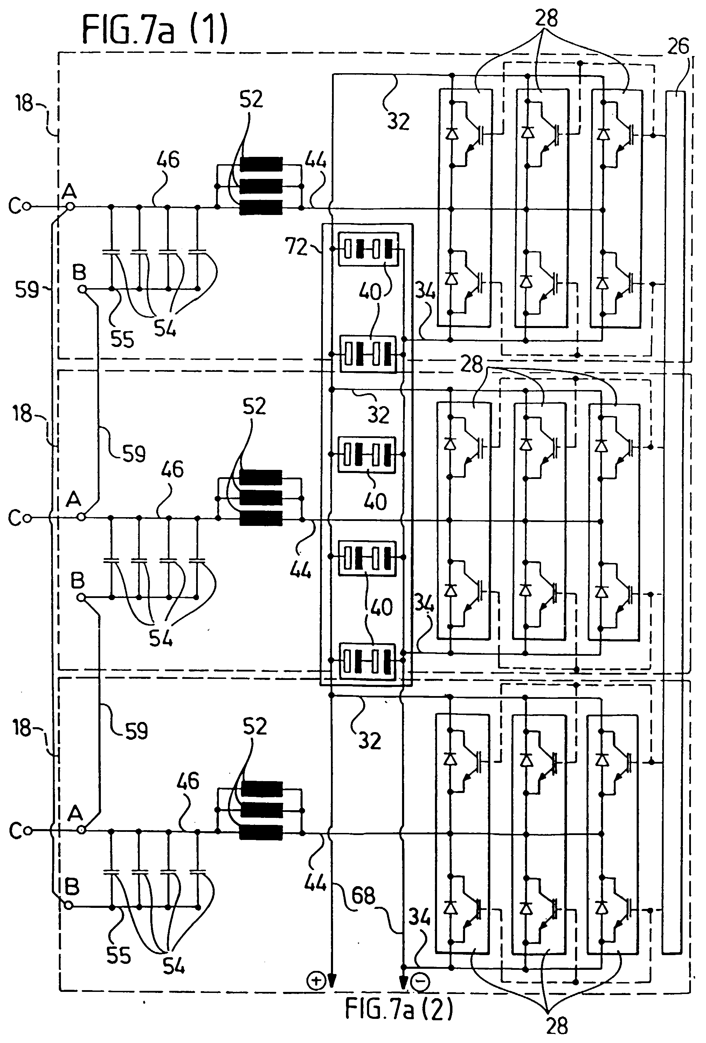

Fig. 6 zeigt eine weitere Ausführungsform der Stromrichters 10, wobei dieser am Eingang 12 3-phasig und am Ausgang 14 6-phasig ausgebildet ist. Um sowohl eingangsseitig als auch ausgangsseitig eine gleiche, installierte Leistungsfähigkeit des Stromrichters 10 zu realisieren, sind sowohl dem Eingang 12 als auch dem Ausgang 14 jeweils sechs Grundelemente 18 zugeordnet. Entsprechend dem Ausführungsbeispiel nach Fig. 1 sind auch bei diesen Ausführungsbeispiel alle Grundelemente 18 zwischenkreisseitig parallel geschaltet.

Eingangsseitig arbeiten jeweils zwei Grundelemente 18 synchron, dies bedeutet, jeweils zwei Grundelemente 18 sind mit der gleichen Eingangsleitung 16 an ihren Anschlüssen A verbunden und daher der gleichen Phase zugeordnet. Dabei werden alle Halbbrücken 28 der jeweils eine Phase bildenden Grundelemente 18 synchron geschaltet. An der Ausgangsseite des Stromrichters 10 sind die sechs Ausgangsleitungen 22 jeweils mit einem Grundelement 18 am Anschluß A verbunden. Dementsprechend wird am Ausgang 14 des Stromrichters 10 ein 6-phasiges Drehspannungssystem zur Versorgung einer 6-phasigen Drehfeldmaschine ausgegeben.

Je nach gewünschter Belastbarkeit können auch mehr als zwei Grundelemente 18 an eine Phase gemeinsam angeschlossen sein bzw. diese bilden.

Es ist aber auch möglich, daß nur drei eingangsseitige Grundelemente 18 vorgesehen sind, die durch eine Verdoppelung ihrer jeweiligen Anzahl von Halbbrücken 28 eine gegenüber den den Ausgang 22 speisenden sechs Grundelementen 18 doppelte Strombelastbarkeit pro Grundelement 18 aufweisen.

Außerdem kann der Stromrichter 10 oder ein aus den Grundelementen 18 aufgebauter Wechselrichter zur bedarfsgerechten Leistungsanpassung Grundelemente 18 mit jeweils z parallel geschalteten Halbbrücken 28 aufweisen. Hierbei ist z eine ganze Zahl. Vorzugsweise sind dabei z Kondensatoren 40 zur Glättung des Zwischenkreises 20 sowie z Filter 50 pro Grundelement 18 vorgesehen. Dadurch wird erreicht, daß die immer auftretenden Stör- bzw. Überspannungen trotz einer Steigerung der Leistung pro Grundelement 18 bei einer Erhöhung von z im wesentlichen gleich bleiben. Dies beruht auf der durch die Parallelschaltung von einzelnen Streuinduktivitäten verringerten Gesamtstreuinduktivität, wie dies bereits vorangehend beschrieben ist.

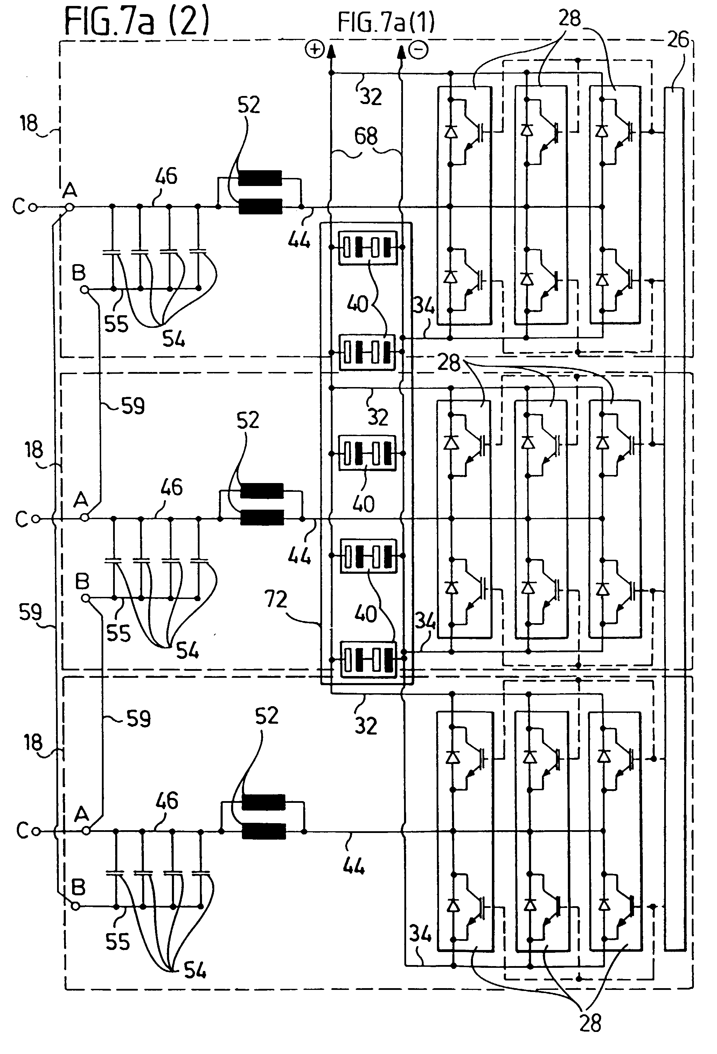

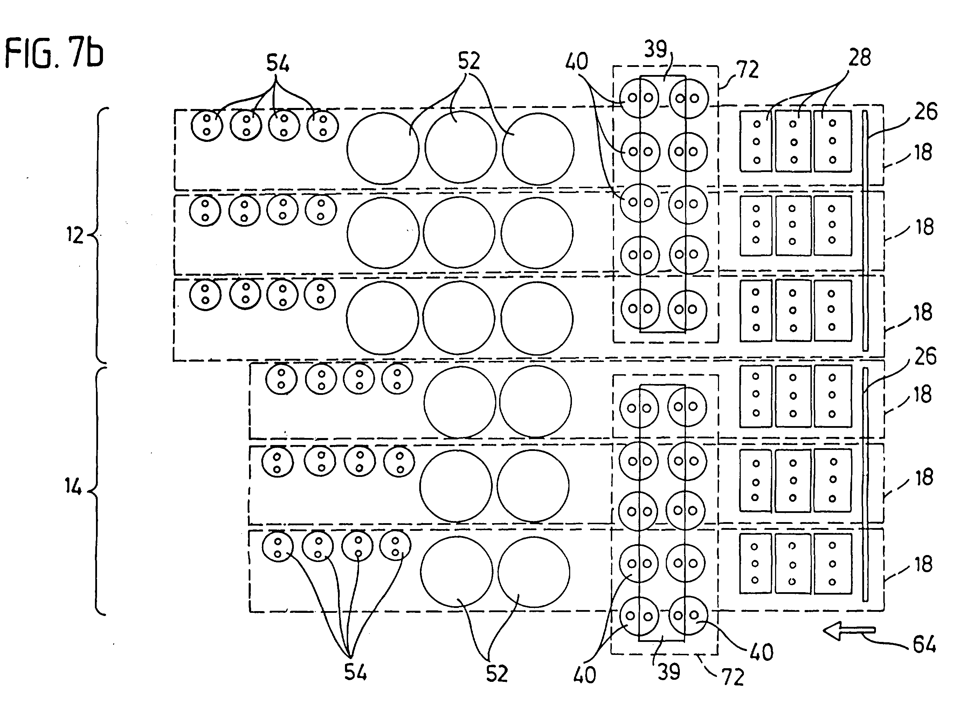

Jedoch ist es auch möglich, von z abweichende Anzahlen jeweils gleicher Bauelemente, wie Kondensatoren 40, 54 oder Drosseln 52, mit den z Halbbrücken 28 in einem Grundelement 18 zu kombinieren. Dies ist bei dem weiteren Ausführungsbeispiel eines 3-phasigen Stromrichters 10 gemäß dem Schaltbild nach den Fig. 7a(1) und 7a(2) der Fall. Der prinzipielle Aufbau dieser Ausführungsform des Stromrichters 10 ist in Fig. 7b ohne die erforderlichen elektrischen Verbindungen dargestellt.

Jeweils drei Grundelemente 18 sind dem Eingang 12 und dem Ausgang 14 des Stromrichters 10 zugeordnet. Jedes Grundelement weist drei parallel geschaltete Halbbrücken 28 auf. z ist hier also drei. Eine Besonderheit dieser Ausführungsform ist dadurch gegeben, daß sowohl den drei eingangsseitigen als auch den drei ausgangsseitigen Grundelementen 18 jeweils eine Gruppe 72 aus zehn Kondensatoren 40 zur Glättung des Zwischenkreises 20 zugeordnet ist. Die jeweils zehn Kondensatoren 40 bilden fünf Paare von jeweils zwei in Reihe geschalteten Kondensatoren 40. Die Paare sind alle am Zwischenkreis 20 parallel geschaltet. Dementsprechend sind abweichend von z = 3 jedem Grundelement 18 rechnerisch 5/3 Paare von Kondensatoren 40 zugeordnet.

Bei den Gruppen 72 ist die elektrische Verbindung 39 für die Reihenschaltung der zwei jeweils ein Paar bildenden Kondensatoren 40 plattenförmig ausgebildet.

Bei der Ausführungsform nach den Figuren 7a und b ist das bei den sonstigen Ausführungsbeispielen vorhandene Prinzip der Bildung sowohl einer funktionellen als auch einer baulichen Einheit als Grundelement 18 insoweit durchbrochen, als die Gruppen 72 der Kondensatoren 40 jeweils für alle drei eingangsseitigen und alle drei ausgangsseitigen Grundelemente 18 eine über das einzelne Grundelement 18 hinausgehende bauliche Einheit bilden.

Die drei eingangsseitigen Grundelemente 18 weisen weiter jeweils drei Drosseln 52 sowie vier Kondensatoren 54 zur Bildung von Filtern 50 auf. Bei den drei ausgangsseitigen Grundelementen 18 sind jeweils zwei Drosseln 52 und vier Kondensatoren 54 zur Bildung von Filtern 50 vorgesehen. Somit sind abweichend von z = 3 den einzelnen Grundelementen 18 jeweils vier Kondensatoren 54 und teilweise nur zwei Drosseln 52 zugeordnet.

Die Abweichungen der jeweiligen Anzahlen der Bauelemente 40, 52, 54 von den Anzahlen der Halbbrücken 28 pro Grundelement 18 sind im Hinblick auf eine technisch-wirtschaftliche Optimierung sinnvoll.

Die bezüglich ihrer Haupterstreckungsrichtung 64 nebeneinanderliegend angeordneten Grundelemente 18 weisen neben den bereits erwähnten, sich über mehrere Grundelemente 18 erstreckenden Gruppen 72 von Kondensatoren 40 des weiteren Steuereinheiten 26 auf, wobei jeweils sowohl den drei eingangsseitigen Grundelementen 18 als auch den drei ausgangsseitigen Grundelementen 18 eine Steuereinheit 26 zugeordnet ist.

## Patentansprüche

1. Selbstgeführter Stromrichter (10) mit einem mehrphasigen Eingang (12), einem mehrphasigen Ausgang (14) und einem Gleichspannungszwischenkreis (20), wobei mehrere gleichartige Grundelemente (18) jeweils zwischen den Zwischenkreis (20) und den Eingang (12) oder den Ausgang (14) geschaltet sind, wobei die Grundelemente (18) jeweils mindestens eine einen steuerbaren Leistungshalbleiter (42) umfassende Halbbrücke (28) und mindestens einen Kondensator (40) zur Glättung des Zwischenkreises (20) aufweisen, wobei die Grundelemente (18) am Zwischenkreis (20) parallel geschaltet sind, und wobei die Grundelemente (18) jeweils nur mit ein oder zwei Phasen (Anschluß A, B) des Eingangs (12) oder des Ausgangs (14) verbunden sind, dadurch gekennzeichnet, daß jedes Grundelement (18) mindestens ein Filter (50) zur Filterung der Phase des Grundelements (18) aufweist, wobei das Filter (50) aus mindestens einer Drossel (52), die in Serie in die Phase geschaltet ist, und mindestens einem Kondensator (54), der zwischen die Phase und eine andere Phase oder einen Abgriff des Zwischenkreises (20) geschaltet ist, besteht.

2. Stromrichter nach Anspruch 1, dadurch gekennzeichnet, daß jedes Grundelement (18) als Filter (50) mehrere parallel geschaltete Drosseln (52) und mehrere parallel geschaltete Kondensatoren (54) aufweist.

3. Stromrichter nach einem der vorangehenden Ansprüche, dadurch gekennzeichnet, daß jedes Grundelement (18) als eine Baueinheit (60) ausgebildet ist.

4. Stromrichter nach einem der vorangehenden Ansprüche, dadurch gekennzeichnet, daß bei jedem Grundelement (18) die einzelnen Bauelemente, wie Halbbrücken (28), Kondensatoren (40) zur Glättung oder Filter (50), im wesentlichen in einer Haupterstreckungsrichtung (64) aufeinanderfolgend angeordnet sind.

5. Stromrichter nach Anspruch 4, dadurch gekennzeichnet, daß Bauelemente (28, 40, 50, 52, 54) gleicher Funktion benachbart angeordnet sind.

6. Stromrichter nach einem der vorangehenden Ansprüche, dadurch gekennzeichnet, daß stark strombelastete Verbindungen (32, 34, 39, 44, 46, 55, 56, 57, 59) zwischen den Bauelementen (28, 40, 50, 52, 54) eines Grundelements (18) im wesentlichen parallel verlaufend zu einer Haupterstreckungsrichtung (64) des Grundelements (18) und insbesondere eng benachbart angeordnet sind.

7. Stromrichter nach einem der vorangehenden Ansprüche, dadurch gekennzeichnet, daß alle stark strombelasteten Anschlüsse der Bauelemente (28, 40, 50, 52, 54) im wesentlichen in einer Ebene angeordnet sind.

8. Stromrichter nach einem der vorangehenden Ansprüche, dadurch gekennzeichnet, daß der Stromrichter (10) zur Kühlung, insbesondere der steuerbaren Leistungshalbleiter (42) und der Dioden (48), eine Vorrichtung zur Belüftung mit einem im wesentlichen quer zu einer Haupterstreckungsrichtung (64) der Grundelemente (18) verlaufenden Luftstrom aufweist.

9. Stromrichter nach einem der vorangehenden Ansprüche, dadurch gekennzeichnet, daß die elektrischen Verbindungen (32, 34, 39, 44, 46, 55, 56, 57, 59) innerhalb der Grundelemente (18) und die erforderlichen elektrischen Verbindungen (21) zwischen den Grundelementen (18) jeweils eng benachbart verlaufen und als Sammelschienen (68) oder plattenförmig, insbesondere niederinduktiv ausgebildet sind.

10. Stromrichter nach einem der vorangehenden Ansprüche, dadurch gekennzeichnet, daß die Grundelemente (18) zur Parallelschaltung jeweils direkt an den Kondensatoren (40) zur Glättung mit dem Zwischenkreis (20) verbunden sind.

11. Stromrichter nach einem der voranstehenden Ansprüche, dadurch gekennzeichnet, daß jedes Grundelement (18) eine Steuereinheit (26) zur Steuerung der steuerbaren Leistungshalbleiter (42) aufweist.

12. Stromrichter nach einem der voranstehenden Ansprüche, dadurch gekennzeichnet, daß jedes Grundelement (18) mehrere parallel geschaltete Halbbrücken (28) mit gemeinsamer Phase aufweist.

13. Stromrichter nach Anspruch 12, dadurch gekennzeichnet, daß alle Halbbrücken (28) in einem Grundelement (18) von derselben Steuereinheit (26) angesteuert sind.

14. Stromrichter nach einem der vorangehenden Ansprüche, dadurch gekennzeichnet, daß jedes Grundelement (18) zwei in Reihe geschaltete Kondensatoren (40) zur Glättung des Zwischenkreises (20) aufweist.

15. Stromrichter nach einem der vorangehenden Ansprüche, dadurch gekennzeichnet, daß jedes Grundelement (18) mehrere parallel geschaltete Kondensatoren (40) oder Paare von zwei in Reihe geschalteten Kondensatoren (40) zur Glättung des Zwischenkreises (20) aufweist.

16. Stromrichter nach einem der vorangehenden Ansprüche, dadurch gekennzeichnet, daß jeweils allen eingangsseitigen und/oder allen ausgangsseitigen Grundelementen (18) Gruppen (72) von Kondensatoren (40) zur Glättung des Zwischenkreises (20) zugeordnet sind.

## Claims

1. A self-commutated converter (10) with a multi-phase input (12), a multi-phase output (14) and a d.c.-voltage intermediate circuit (20), a plurality of fundamental elements (18) of the same type being connected in each case between the intermediate circuit (20) and the input (12) or the output (14), the fundamental elements (18) each having at least one half bridge (28) including a controllable power semiconductor (42), and at least one capacitor (40) for smoothing the intermediate circuit (20), the fundamental elements (18) on the intermediate circuit (20) being connected in parallel, and the fundamental elements (18) each being connected only with the one or two phases (connection A, B) of the input (12) or of the output (14), characterised in that each fundamental element (18) has at least one filter (50) for filtering the phase of the fundamental element (18), the filter consisting of at least one damper (52), connected into the phase in series, and at least one capacitor (54), which is connected between the phase and another phase or a tap of the intermediate circuit (20).

2. A converter according to Claim 1, characterised in that each fundamental element (18) has, as filters (50), a plurality of dampers (52) connected in parallel and a plurality of capacitors (54) connected in parallel.

3. A converter according to one of the preceding claims, characterised in that each fundamental element (18) is designed as a structural unit (60).

4. A converter according to one of the preceding claims, characterised in that in each fundamental element (18) the individual components, such as half bridges (28), capacitors (40) for smoothing or filters (50), are arranged substantially in sequence in a principal direction of extent (64).

5. A converter in accordance with Claim 4, characterised in that components (28, 40, 50, 52, 54) of identical function are arranged adjacently.

6. A converter according to one of the preceding claims, characterised in that heavily-loaded connections (32, 34, 39, 44, 46, 55, 56, 57, 59) between the components (28, 40, 50, 52, 54) of a fundamental element (18) are arranged following a course substantially parallel to a principal direction of extent (64) of the fundamental element (18) and in particular closely adjacent.

7. A converter according to one of the preceding claims, characterised in that all heavily-loaded connections between the components (28, 40, 50, 52, 54) are arranged substantially in a plane.

8. A converter according to one of the preceding claims, characterised in that the converter (10) for cooling in particular the controllable power semiconductor (42) and the diodes (48) has a device for ventilating with an air stream flowing substantially transversely to a principal direction of extent (64) of the fundamental elements (18).

9. A converter according to one of the preceding claims, characterised in that the electrical connections (32, 34, 39, 44, 46, 55, 56, 57, 59) within the fundamental elements (18) and the necessary electrical connections (21) between the fundamental elements (18) in each case follow a closely adjacent course and are designed as bus bars (68) or in the form of plates, in particular with low inductance.

10. A converter according to one of the preceding claims, characterised in that, for the purpose of parallel connection, the fundamental elements (18) are each connected to the intermediate circuit (20) directly at the capacitors (40) for smoothing.

11. A converter according to one of the preceding claims, characterised in that each fundamental element (18) has a control unit (26) for controlling the controllable power semiconductor (42).

12. A converter according to one of the preceding claims, characterised in that each fundamental element (18) has a plurality of half bridges (28) of common phase, which are connected in parallel.

13. A converter according to Claim 12, characterised in that all half bridges (28) within a fundamental element (18) are controlled by the same control unit (26).

14. A converter according to one of the preceding claims, characterised in that each fundamental element (18) has two series-connected capacitors (40) for smoothing the intermediate circuit (20).

15. A converter according to one of the preceding claims, characterised in that each fundamental element (18) has a plurality of parallel-connected capacitors (40) or pairs of two series-connected capacitors (40) for smoothing the intermediate circuit (20).

16. A converter according to one of the preceding claims, characterised in that groups (72) of capacitors (40) are assigned to all input-side and/or to all output side fundamental elements (18) for smoothing the intermediate circuit (20).

## Revendications

1. Convertisseur de courant à commutation automatique (10) comportant une entrée polyphasée (12), une sortie polyphasée (14) et un circuit intermédiaire à tension continue (20), et dans lequel plusieurs éléments de base identiques (18) sont branchés respectivement entre le circuit intermédiaire (20) et l'entrée (12) ou la sortie (14), les éléments de base (18) comportent chacun au moins un demi-pont (28) comprenant un semiconducteur de puissance commandable (42), et au moins un condensateur (40) de lissage de la tension du circuit intermédiaire (20), les éléments de base (18) situés dans le circuit intermédiaire (20) sont branchés en parallèle, les éléments de base (18) sont reliés chacun uniquement à une ou deux phases (bornes A, B) de l'entrée (12) ou de la sortie (14), caractérisé en ce que chaque élément de base (18) comporte au moins un filtre (50) servant à filtrer la phase de l'élément de base (18), le filtre (50) étant constitué par au moins une bobine d'arrêt (52), qui est branchée en série dans la phase, et par au moins un condensateur (54), qui est branché entre la phase et une autre phase ou une prise du circuit intermédiaire (20).

2. Convertisseur de courant selon la revendication 1, caractérisé en ce que chaque élément de base (18) comporte, en tant que filtre (50), plusieurs bobines d'arrêt (52) branchées en parallèle et plusieurs condensateurs (54) branchés en parallèle.

3. Convertisseur de courant selon l'une des revendications précédentes, caractérisé en ce que chaque élément de base (18) est agencé sous la forme d'une unité de construction (60).

4. Convertisseur de courant selon l'une des revendications précédentes, caractérisé en ce que dans chaque élément de base (18), les différents composants, tels que des demi-ponts (28) et des condensateurs (40) de lissage de la tension ou des filtres (50), sont disposés essentiellement les uns à la suite des autres essentiellement dans une direction d'étendue principale (64).

5. Convertisseur de courant selon la revendication 4, caractérisé en ce que les composants (28,40,50,52, 54) ayant des fonctions identiques sont disposés au voisinage les uns des autres.

6. Convertisseur de courant selon l'une des revendications précédentes, caractérisé en ce que des liaisons (32,34,39,44,46,55,56,57,59) fortement chargées en courant sont disposées entre les composants (28,40,50, 52,54) d'un élément de base (18) de manière à être essentiellement parallèles à une direction d'étendue principale (64) de l'élément de base (18) et notamment selon une disposition serrée.

7. Convertisseur de courant selon l'une des revendications précédentes, caractérisé en ce que toutes les bornes fortement chargées en courant des composants (28,40,50,52,54) sont disposées essentiellement dans un plan.

8. Convertisseur de courant selon l'une des revendications précédentes, caractérisé en ce que le convertisseur de courant (10) comporte pour le refroidissement, notamment des semiconducteurs de puissance commandables (42) et des diodes (48), un dispositif pour réaliser l'aération avec un courant d'air qui s'étend essentiellement transversalement par rapport à une direction d'étendue principale (64) des éléments de base (18).

9. Convertisseur de courant selon l'une des revendications précédentes, caractérisé en ce que les liaisons électriques (32,34,39,44,46,55,56,57,59) s'étendent à l'intérieur des éléments de base (18) et les liaisons électriques (21) s'étendent entre les éléments de base (18), et ce respectivement selon une disposition serrée, et sont agencées en tant que barres omnibus (68) ou en forme de plaques, notamment avec une faible valeur inductive.

10. Convertisseur de courant selon l'une des revendications précédentes, caractérisé en ce que les éléments de base (18) sont reliés au circuit intermédiaire (20) pour le branchement en parallèle respectivement directement aux condensateurs (40) de lissage de la tension.

11. Convertisseur de courant selon l'une des revendications précédentes, caractérisé en ce que chaque élément de base (18) comporte une unité de commande (26) servant à commander les semiconducteurs de puissance commandables (42).

12. Convertisseur de courant selon l'une des revendications précédentes, caractérisé en ce que chaque élément de base (18) comporte plusieurs demi-ponts (28), branchés en parallèle, avec une phase commune.

13. Convertisseur de courant selon la revendication 12, caractérisé en ce que tous les demi-ponts (28) dans un élément de base (18) sont commandés par la même unité de commande (26).

14. Convertisseur de courant selon l'une des revendications précédentes, caractérisé en ce que chaque élément de base (18) comporte deux condensateurs (40) de lissage de la tension, branchés en série, du circuit intermédiaire.

15. Convertisseur de courant selon l'une des revendications précédentes, caractérisé en ce que chaque élément de base (18) comporte plusieurs condensateurs (40) branchés en parallèle ou des couples de deux condensateurs (40), branchés en série, pour le lissage de la tension du circuit intermédiaire.

16. Convertisseur de courant selon l'une des revendications précédentes, caractérisé en ce que des groupes (72) de condensateurs (40) pour le lissage de la tension du circuit intermédiaire (20) sont associés respectivement à tous les éléments de base (18) situés côté entrée et/ou à tous les éléments de base (18) situés côté sortie.
